# EUROPÄISCHE PATENTSCHRIFT

(11) **EP 1 624 031 B1**
(45) Veröffentlichungstag und Bekanntmachung des Hinweises auf die Patenterteilung: **03.09.2014**
(21) Anmeldenummer: 05106530.8
(22) Anmeldetag: 15.07.2005
(51) Int. Cl.: C09C 3/06, C04B 33/00

(54) **Verfahren zur Herstellung von farbigen Granulaten, und nach diesem Verfahren erhaltene farbige Granulate**
Method for making coloured granulates, and coloured granulates obtained thereby
Procédé pour la fabrication d'un granulé coloré, et granulé coloré obtenu par ce procédé

(30) Priorität: 28.07.2004 DE 102004036650
(43) Veröffentlichungstag der Anmeldung: 08.02.2006
(73) Patentinhaber: bene_fit GmbH, 92242 Hirschau (DE)
(72) Erfinder: Kräuter, Reinhard, 92237 Sulzbach-Rosenberg (DE); Flierl, Michael, 92242 Hirschau (DE)
(74) Vertreter: Hannke, Christian

(56) Entgegenhaltungen:
- DE-B3- 10 335 427
- US-A- 2 142 540
- US-A- 3 208 871
- US-A- 5 362 566
- US-A- 5 382 475

## Beschreibung

Die Erfindung betrifft ein Verfahren zur Herstellung von farbigen Granulaten, die an ihrer Oberfläche mit Farbpigmenten mittels eines Bindemittels beschichtet werden, gemäß dem Oberbegriff des Patentanspruches 1. Des Weiteren betrifft die Erfindung die Verwendung eines Bindemittels zur Beschichtung von Granulaten mit den Farbpigmenten. Zudem wird ein Bindemittel zur Beschichtung von Granulaten und farbige Granulate beschrieben.

Farbige Granulate werden üblicherweise mit Farbpigmenten mittels eines organischen Bindemittels beschichtet bzw. umhüllt. Häufig verwendete Bindemittel sind Polyurethanharze. Epoxidharze oder Polyesterharze. Die auf diese Weise hergestellten farbigen Granulate, wie sie beispielsweise für die Herstellung von Spülen verwendet werden können, weisen nicht dauerhaft chemische Verbindungen auf, d.h. im Laufe der Zeit lösen sich die Farbpigmente wieder von den Granulaten, insbesondere bei der Kontaktierung mit organischen Lösemitteln.

Zudem sind Polyurethanharze, Epoxidharze oder Polyesterharze als Bindemittel kostenintensiv in der Anschaffung.

Derart hergestellte Granulate weisen weiterhin eine geringe UV-Stabilität auf, die sich durch eine Farbänderung bei starker Sonneneinstrahlung bemerkbar macht. Auch hier liegt wiederum ein Sichablösen von Farbpigmenten von der Oberfläche der Granulate vor. Wiederum kann dies zu unerwünschten Farbveränderungen führen.

US 5 382 475 A offenbart algizid beschichtete Granulate mit verbesserter Farbbeständigkeit. Die Granulate sind dabei mit einer dreilagigen Beschichtung beschichtet, wobei zwei dieser Schichten algizide Kupferverbindungen umfassen. Die dritte, obere Schicht beinhaltet ein Pigment, eine Borverbindung und Zinkoxid. Die keramischen Beschichtungen werden in einem direkt befeuerten Ofen bei Temperaturen zwischen 490 - 510°C gebrannt.

US 3 208 871 A zeigt ein Verfahren zur Herstellung von farbigen Granulaten für Anwendungen in der Bauindustrie. Die hierbei hergestellten Granulatpartikel weisen eine verbesserte Haltbarkeit gegenüber Umwelteinflüssen und somit eine verbesserte Farbechtheit auf. Hier-für werden zwei, sich in ihrem Kaolinanteil unterscheidende, Beschichtungen verwendet, welche darüber hinaus ein Pigment, Natriumsilikat und Wasser enthalten und bei unterschiedlichen Temperaturen gebrannt werden.

US 5 362 566 A offenbart einen Partikelüberzug zur Verringerung der Staubentwicklung bei der Behandlung von Granulaten. Hierfür können verschiedene Arten an Granulaten, wie zum Beispiel poröse Mineralien wie Basalt oder Schiefer oder aber auch weniger poröse Mineralien wie Quarzsandstein oder Kalksandstein mit einem Überzug aus organischem Öl versehen werden.

US 2 142 540 A beschreibt künstlich gefärbte Granulate und Verfahren zu deren Herstellung. Hierbei werden mineralische Granulate, wie zum Beispiel Basalt, ausgewählt und mit einre Schicht aus Alkalisilikat überzogen. Dieses Alkalisilikat kann auch ein Pigment und/oder eine Borverbindung umfassen. Das Brennen dieser Granulate erfolgt in einem zweistufigen Prozess.

Demzufolge liegt der vorliegenden Erfindung die Aufgabe zugrunde, ein Verfahren zur Herstellung von farbigen Granulaten zur Verfügung zu stellen, mittels welchem farbige Granulate mit hoher UV-Stabilität, großer Chemikalienbeständigkeit, insbesondere gegenüber organischen Lösemitteln, und mit niedrigen Herstellungskosten geschaffen werden können, sowie hierfür notwendige farbige Granulate und Bindemittel zur Verfügung zu stellen.

Diese Aufgabe wird verfahrensseitig durch die Merkmale des Patentanspruches 1 und stoffseitig durch die Merkmale des Patentanspruchs 6 gelöst.

Ein wesentlicher Punkt der Erfindung liegt darin, dass bei einem Verfahren zur Herstellung von anorganischen farbigen Granulaten, die an ihrer Oberfläche mit Farbpigmenten mittels eines Bindemittels beschichtet werden, folgende Schritte durchgeführt werden:
Auswählen eines Alkali- oder Erdalkalisilikats oder Mischungen davon;
Bilden eines Bindemittels aus H₂O und dem ausgewählten Alkali- oder Erdalkalisilikat oder Mischungen davon, wobei die Herstellung des Bindemittels folgende Schritte umfasst:
   - Vermischen von Borsäure mit Natronlauge zu einer Natronlauge-Borsäure-Lösung und
   - Vermischen der Natronlauge-Borsäure-Lösung mit einer NatriumsilikatLösung zu einer Lösung aus Na₂O, SiO₂ und B₂O₃;
   - Hinzufügen mindestens eines Additivs zu dem ein Wasserglas darstellenden Bindemittel wobei das Additiv eine Aluminium-, Phosphor-, Calcium-, Zink-, Titan-, Schwefel- oder Stickstoff-Verbindung oder eine Mischung davon ist;
   - Auswählen der unbeschichteten Granulate aus granuliertem Glassplitt, Glasgriess, Blähton, Blähglas, Perlit, Keramiksplitt, Al₂O₃-Splitt, Borglas, Schiefersplitt. Quarzsand oder Kalkstein;
   - Vermischen der Farbpigmente mit den ausgewählten unbeschichteten Granulaten und dem Bindemiltel zu einem Gesamtgemisch; und
   - Brennen des Gesamtgemisches mit einer vorbestimmbaren Temperatur aus einem Temperaturbereich von 450°C - 550°C, wobei das Gesamtgemisch innerhalb einer Brennkammer eines Drehrohrofens mittels einer außerhalb der Brennkammer angeordneten Heizquelle indirekt erwärmt wird und, sich der Drehrohrofen während des Brennvorgangs zur Erzeugung von lose vorliegenden farbigen Granulaten dreht.

Durch die Verwendung von Alkali- oder Erdalkalisililkaten oder Mischungen davon als Bestandteil für das Bindemittel wird zum einen eine hohe UV-Stabilität und zum anderen das Zurverfügungstellen eines billigen Rohstoffes für die Herstellung der Bindemittel erzielt. Die anorganischen Granulate weisen in Verbindung mit dem erfindungsgemäß verwendeten Bindemittel geringe oder gar keine Instabilität gegenüber organischen Lösemitteln auf, abhängig davon, welches Alkall- oder Erdalkalisilikat verwendet wird. Insbesondere wird keine Ablösung von Farbpigmenten oder eine unerwünschte Veränderung des pH-Wertes festgestellt.

Gemäß einer bevorzugten Ausführungsform werden die Alkali- oder Erdalkalisilikate aus Lithium-, Magnesium-, Kalium- oder Natrium-Silikat oder Mischungen daraus ausgewählt. Diese Alkali- oder Erdalkalisilikate weisen zur Bildung von Wassergläsern besonders hohe und dauerhafte Bindungskräfte für die Verbindung der Farbpigmente mit den Granulatoberflächen auf.

Erfindungsgemäß folgt nach dem Schritt des Brennens ein Schritt des Hinzufügens von mindestens einem Additiv zu dem ein Wasserglas darstellenden Bindemittel, wobei das Additiv eine Aluminium-, Phosphor-, Calcium-, Zink-, Titan-, Schwefel- oder StickstoffVerbindung oder eine Mischung davon ist. Dadurch ergibt sich eine stabilisierende Wirkung für die Wassergläser darstellenden Bindemittel, wobei alternativ dazu ein Borsäurezusatz durch Vermischen von Borsäure mit beispielsweise Natronlauge zu einer Natronlauge-Borsäure-Lösung und durch Vermischen der Natronlauge-Borsäure-Lösung mit einer Natrium-Silikat-Lösung zu einer Lösung aus Na₂O, SiO₂ und B₂O₃ verwendet werden kann. Bei Verwendung eines derart borsäurestabilisiertem Natriumwasserglases wird vorzugsweise ein Lösungsverhältnis von 1 : 1,0 : 0,44 bis 1 : 2,49 : 0,44, vorzugsweise 1 : 1,0 : 0,44 bis 1 : 2,0 : 0,44.

In dem Schritt des Brennens umfasst der Temperaturbereich Temperaturen von 450°C - 550°C, wobei das Gesamtgemisch innerhalb einer Brennkammer des Drehrohrofens mittels einer außerhalb der Brennkammer angeordneten Heizquelle indirekt erwärmt wird.

Um die Farbpigmenthaftung im Nachhinein zu überprüfen, wird in einem Schritt der Prüfung der Farbpigmenthaftung an der Granulatoberfläche mittels eines Kochtests die Menge an Farbänderungen der farbigen Granulate bei einer vorbestimmbaren Temperatur aufgrund von Farbpigmentablösungen festgestellt. Bei einem derartigen Kochtest wird das farbige Granulat stark erhitzt und zum Kochen gebracht. Abhängig von der Farbpigmenthaftung an den Granulatoberflächen führt dies zu einer mehr oder weniger starken Eintrübung des Kochwassers aufgrund von Farbpigmentablösungen.

Weiterhin wird der Schritt des Bestimmens des pH-Wertes des Gesamtgemisches nach dem Schritt des Brennens des Gesamtgemisches durchgeführt.

Derart hergestellte farbige Granulate weisen vorzugsweise einen pH-Wert von 6 - 8 auf.

Vorteilhaft kann das Bindemittel bestehend aus mindestens einem Alkali- oder Erdalkalisilikat oder Mischungen davon und H₂O, und mit dem Bindemittel vermischte Farbpigmente für eine Oberflächenbeschichtung von Granulaten, wie granuliertem Glassplitt, Glasgriess, Blähton, Blähglas, Perlit, Keramiksplitt, Al₂O₃-Splitt, Borglas, Schiefersplitt, Quarzsand oder Kalkstein, verwendet werden.

Weitere vorteilhafte Ausführungsformen ergeben sich aus den Unteransprüchen.

### Referenzbeispiel 1

In einem Beispiel 1 des erfindungsgemäßen Verfahrens werden als Farbpigmente Eisenoxidpigmente ausgewählt. Als Alkalisilikat wird Natriumsilikat ausgewählt. Das Natriumsilikat wird mit H₂O vermengt und ergibt ein Natrium-Wasserglas.

Als zu beschichtendes Granulat werden Quarzsandkörner ausgewählt, welche mit den Eisenoxidpigmenten und dem Natrium-Wasserglas zu einem Gesamtgemisch vermengt werden.

In einem Drehrohrofen wird das Gesamtgemisch aktiv, also direkt, mittels einer Erdgasflamme oder passiv, also indirekt, mittels außenliegenden Heizwendeln bei verschiedenen Temperaturen erwärmt. Der nachfolgenden Tabelle 1 sind verschiedene Proben 1 - 6 mit entweder aktiver oder passiver Erwärmung bei verschiedenen Temperaturen und den dazugehörigen Testergebnissen, resultierend aus einem nachfolgenden Kochtest, einer Farbänderungsbestimmung und einer pH-Wertmessung zu entnehmen.

**Tabelle 1:**

| **Bezeichnung** | **Herstellung/ Temperatur in °C** | *** Kochtest Erfüllungsquote in %** | **Gesamtfarbdifferenz ΔE** | **pH-Wert nach 1 Tag** | **pH-Wert n. 10Tagen** |
|---|---|---|---|---|---|
| Probe 1 | aktiv / 400° | 30 % | --- | 10,2 | 10,4 |
| Probe 2 | aktiv / 500° | 50 % | 1,90 | 10,0 | 10,2 |
| Probe 3 | aktiv / 600° | 90 % | 2,62 | 7,5 | 7,6 |
| Probe 4 | passiv / 400° | 80 % | 1,10 | 6,8 | 6,9 |
| Probe 5 | passiv / 500° | 90 % | 0,08 | 6,5 | 6,8 |
| Probe 6 | passiv / 600° | 95 % | 1,56 | 6,7 | 6,8 |

| | | | | | |
|---|---|---|---|---|---|
| *) Kochtest Erfüllungsquote 0 %: alle Pigmente lösen sich vom Trägermaterial, 100 %: kein Farbpigment löst sich vom Trägermaterial. | | | | | |

Ein Vergleich der verschiedenen Proben zeigt deutlich, dass in Abhängigkeit von der Brenntemperatur und von der Verwendung einer aktiven oder passiven Erwärmung unterschiedliche Farbdifferenzwerte und Kochtesterfüllungsquoten erreicht werden können. Hierbei ist eine Kochtesterfüllungsquote von 0 % gleichbedeutend mit einer Ablösung sämtlicher Farbpigmente von dem Trägermaterial bzw. den Granulaten. Eine Kochtesterfüllungsquote von 100 % steht für keine stattfindende Farbpigmentablösung von dem Trägermaterial.

Für die Bestimmung der Gesamtfarbdifferenz-Werte ΔE wurde die Probe 1 als Referenz- bzw. Bezugsprobe verwendet.

Wie der Tabelle 1 zu entnehmen ist, liegen die pH-Werte der einzelnen Proben deutlich niedriger bei der Verwendung einer passiven Erwärmung. Weiterhin können optimierte Werte in der Kochtesterfüllungsquote durch Erhöhung der Brenntemperatur auf 600°C und somit bessere Gesamtfarbdifferenzwerte aufgrund der geringeren Farbpigmentauflösung erreicht werden.

### Referenzbeispiel 2

In einem weiteren Beispiel 2 des erfindungsgemäßen Verfahrens werden als Farbpigmente wiederum Eisenoxidpigmente ausgewählt. Als Granulate werden wiederum Quarzsandkörner verwendet. Das Bindemittel wird aus borsäurestabilisiertem Natrium-Wasserglas hergestellt, welches sich durch vermischen von Natriumsilikat mit H₂O, dem anschließenden Vermischen von Borsäure mit Natronlauge zu einer Borsäure-Natronlauge-Lösung und dem Hinzumischen der Natriumsilikatlösung zu dieser Borsäure-Natronlauge-Lösung erreicht. Diese erzielte Lösung weist für Na₂O, SiO₂ und B₂O₃ ein Verhältnis von 1 : 2,1 : 0,44 auf.

Ein derartiges borsäurestabilisiertes Natrium-Wasserglas wird wiederum mit den Eisenoxidpigmenten und den Quarzsandkörnern zu einem Gesamtgemisch vermengt und bei verschiedenen Temperaturen sowohl aktiv als auch passiv, wie bereits oben dargestellt, in einem Drehrohrofen gebrannt. Nachfolgender Tabelle 2 sind die Messergebnisse für die Kochtesterfüllungsquote die Gesamtfarbdifferenz und die gemessenen pH-Werte nach 1 Tag und nach 1 Jahr gemäß den Proben 7 - 12 zu entnehmen.

**Tabelle 2:**

| **Bezeichnung** | **Herstellung/ Temperatur in °C** | *** Kochtest Erfüllungsquote in %** | **Gesamtfarbdifferenz ΔE** | **pH-Wert nach 1 Tag** | **pH-Wert n. 1 Jahr** |
|---|---|---|---|---|---|
| Probe 7 | aktiv / 400° | 40 % | --- | 10,0 | 10,4 |
| Probe 8 | aktiv / 500° | 60 % | 2,37 | 9,6 | 10,2 |
| Probe 9 | aktiv / 600° | 80 % | 4,15 | 8,5 | 9,1 |
| Probe 10 | passiv / 400° | 80% | 1,08 | 7,7 | 8,5 |
| Probe 11 | passiv / 500° | 90 % | 0,69 | 7,3 | 7,8 |
| Probe 12 | passiv / 600° | 95 % | 1,62 | 6,9 | 7,3 |

| | | | | | |
|---|---|---|---|---|---|
| * Kochtest Erfüllungsquote 0 %: alle Pigmente lösen sich vom Trägermaterial, 100 %: kein Farbpigment löst sich vom Trägermaterial. | | | | | |

Den Messwerten gemäß Tabelle 2 ist zu entnehmen, dass eine hohe Farbpigmenthaftung an der Oberfläche der Granulate mit hohen Gesamtfarbdifferenzwerten und langzeitstabilen pH-Werten bei einer passiven, also indirekten Erwärmung des Gesamtgemisches im Drehrohrofen vorzugsweise mit einer Temperatur von 600°C erreicht wird. Demzufolge ist, wie diesen Versuchsreihen zu entnehmen ist, eine deutliche Verbesserung durch die Anwendung einer passiven Erwärmung des Gesamtgemisches und höherer Brenntemperaturen bis zu 600°C erzielbar.

## Patentansprüche

1. Verfahren zur Herstellung von anorganischen farbigen Granulaten, die an ihrer Oberfläche mit Farbpigmenten mittels eines Bindemittels beschichtet werden,
**gekennzeichnet durch**
folgende Schritte:
- Auswählen eines Alkall- oder Erdalkalisilikats oder Mischungen davon;
- Bilden eines Bindemittels aus H₂O und dem ausgewählten Alkali- oder Erdalkalisilikat oder Mischungen davon, wobei die Herstellung des Bindemittels folgende Schritte umfasst:
- Vermischen von Borsäure mit Natronlauge zu einer Natronlauge-Borsäure-Lösung und
- Vermischen der Natronlauge-Borsäure-Lösung mit einer Natriumsilikat-Lösung zu einer Lösung aus Na₂O, SiO₂ und B₂O₃;
- Hinzufügen mindestens eines Additivs zu dem ein Wasserglas darstellenden Bindemittel wobei das Additiv eine Aluminium-, Phosphor-, Calcium-, Zink-, Titan-, Schwefel- oder Stickstoff-Verbindung oder eine Mischung davon ist:
- Auswählen der unbeschichteten Granulate aus granuliertem Glassplitt, Glasgriess, Blähton, Blähglas, Perlit, Keramiksplitt, Al₂O₃-Splitt, Borglas, Schiefersplitt, Quarzsand oder Kalkstein;
- Vermischen der Farbpigmente mit den ausgewählten unbeschichteten Granulaten und dem Bindemittel zu einem Gesamtgemisch; und
- Brennen des Gesamtgemisches mit einer vorbestimmbaren Temperatur aus einem Temperaturbereich von 450°C - 550°C, wobei das Gesamtgemisch innerhalb einer Brennkammer eines Drehrohrofens mittels einer außerhalb der Brennkammer angeordneten Heizquelle Indirekt erwärmt wird und, sich der Drehrohrofen während des Brennvorgangs zur Erzeugung von lose vorliegenden farbigen Granulaten dreht.

2. Verfahren nach Anspruch 1,
**dadurch gekennzeichnet, dass**
das ausgewählte Alkall- oder Erdalkalisilikat Lithium-, Magnesium-, Kalium- oder Natriumsilikat oder eine Mischung daraus ist.

3. Verfahren nach einem der vorangegangenen Ansprüche,
**gekennzeichnet durch**
den Schritt des Überprüfens der Farbpigmenthaftung an der Granulatoberfläche mittels eines Kochtests zur Feststellung einer Menge an Farbänderungen der farbigen Granulate bei einer vorbestimmbaren Temperatur aufgrund von Farbpigmentablösungen.

4. Verfahren nach einem der vorangegangenen Ansprüche,
**gekennzeichnet durch**
den Schritt des Bestimmens des pH-Wertes des Gesamtgemisches nach dem Schritt des Brennens des Gesamtgemisches.

5. Verwendung eines Bindemittels bestehend aus mindestens einem Alkali- oder Erdalkalisilikat oder Mischungen davon, mindestens einem Additiv, wobei das Additiv eine Aluminium-, Phosphor-, Calcium-, Zink-, Titan-, Schwefel- oder Stickstoff-Verbindung oder eine Mischung davon ist, einer durch Vermischen von Borsäure mit Natronlauge hergestellten Natronlauge-Borsäure-Lösung und H₂O, und mit dem Bindemittel vermischte Farbpigmente für eine Oberflächenbeschichtung von Granulaten in einem Temperaturbereich von 450°C - 550°C mittels einer außerhalb der Brennkammer angeordneten Heizquelle, wobei die Granulate granulierter Glassplitt, Glasgriess, Blähton, Blähglas, Perlit, Keramiksplitt, Al₂O₃-Splitt, Borglas, Schiefersplitt, Quarzsand oder Kalkstein sind.

6. Farbige Granulate,
wobei
die farbigen Granulate nach einem Verfahren gemäß einem der Ansprüche 1 - 4 hergestellt sind,
**dadurch gekennzeichnet, dass** die Granulate mit einem Bindemittel aus borsäurestabilisiertem Wasserglas beschichtet sind.

7. Farbige Granulate nach Anspruch 6,
**dadurch gekennzeichnet, dass**
die farbigen Granulate einen pH-Wert von ca. 6 - 8 aufweisen.

## Claims

1. A method of producing inorganic coloured granulates which are coated on their surface with colour pigments by means of a binder,
**characterized by** the following steps:
- selecting an alkali or alkaline-earth silicate or mixtures thereof;
- forming a binder from H₂O and the selected alkali or alkaline-earth silicate or mixtures thereof, wherein the production of the binder comprises the following steps:
- mixing boric acid with caustic soda to form a caustic soda / boric acid solution and
- mixing the caustic soda / boric acid solution with a sodium silicate solution to form a solution of Na₂O, SiO₂ and B₂O₃;
- adding at least one additive to the binder which represents a water glass, wherein the additive is an aluminium, phosphorus, calcium, zinc, titanium, sulphur or nitrogen compound or a mixture thereof;
- selecting the non-coated granulates from granulated glass chips, glass grits, expanded clay, expanded glass, perlite, ceramic chips, Al₂O₃ chips, boron glass, slate chips, quartz sand or limestone;
- mixing the colour pigments with the selected non-coated granulates and the binder to form an overall mixture, and
- firing the overall mixture at a pre-determined temperature in a temperature range of from 450°C to 550°C, wherein the overall mixture is heated inside a firing chamber of a rotary kiln indirectly by means of a heat source arranged outside the firing chamber, and the rotary kiln rotates during the firing procedure in order to produce coloured granulates which occur in a loose manner.

2. A method according to claim 1, **characterized in that** the selected alkali or alkaline-earth silicate is lithium, magnesium, potassium or sodium silicate or a mixture thereof.

3. A method according to one of the preceding claims, **characterized by** the step of checking the colour pigment adhesion to the surface of the granulates by means of a boiling test in order to determine an amount of colour changes of the coloured granulates on the basis of colour pigment solutions at a temperature capable of being pre-determined.

4. A method according to any one of the preceding claims, **characterized by** the step of determining the pH value of the overall mixture after the step of firing the overall mixture.

5. Use of a binder consisting of at least one alkali or alkaline-earth silicate or mixtures thereof, at least one additive, wherein the additive is an aluminium, phosphorus, calcium, zinc, titanium, sulphur or nitrogen compound or a mixture thereof, a caustic soda / boric acid solution - formed by mixing boric acid with caustic soda - and H₂O, and colour pigments mixed with the binder for a surface coating of granulates in a temperature range of from 450°C to 550°C by means of a heat source arranged outside the firing chamber, wherein the granulates are granulated glass chips, glass grits, expanded clay, expanded glass, perlite, ceramic chips, Al₂O₃ chips, boron glass, slate chips, quartz sand or limestone.

6. Coloured granulates, wherein the coloured granulates are produced in accordance with a method according to any one of claims 1 to 4, **characterized in that** the granulates are coated with a binder of water glass stabilized with boric acid.

7. Coloured granulates according to claim 6, **characterized in that** the coloured granulates have a pH value of from approximately 6 to 8.

## Revendications

1. Procédé de production de granulés colorés inorganiques qui sont revêtus sur leur surface de pigments de couleur au moyen d'un agent liant,
**caractérisé par**
les étapes suivantes :
- sélection d'un silicate alcalin ou alcalinoterreux ou de mélanges de ceux-ci ;
- formation d'un agent liant à partir de H₂O et du silicate alcalin ou alcalinoterreux sélectionné ou de mélanges de ceux-ci, dans lequel la production du liant comprend les étapes suivantes :
- mélange d'acide borique avec de la soude caustique pour donner une solution de soude caustique-acide borique et
- mélange de la solution de soude caustique-acide borique avec une solution de silicate de sodium pour donner une solution de Na₂O, SiO₂ et B₂O₃ ;
- addition d'au moins un additif au liant représentant un verre soluble, l'additif étant un composé d'aluminium, de phosphore, de calcium, de zinc, de titane, de soufre ou d'azote ou un mélange de ceux-ci ;
- sélection des granulés non revêtus parmi des éclats de verre granulés, de la farine de verre, de l'argile expansée, du verre expansé, de la perlite, des éclats de céramique, des éclats d'Al₂O₃, du sable de bore, des éclats d'ardoise, du sable de quartz ou du calcaire ;
- mélange des pigments colorés avec les granulés non revêtus sélectionnés et le liant pour donner un mélange total ; et
- combustion du mélange total à une température prédéterminée dans une plage de températures allant de 450 °C à 550 °C, le mélange total étant chauffé indirectement dans une chambre de combustion d'un four tubulaire rotatif au moyen d'une source de chauffage disposée à l'extérieur de la chambre de combustion et le four tubulaire rotatif tournant pendant le processus de combustion pour générer des granulés colorés sous forme libre.

2. Procédé selon la revendication 1,
**caractérisé en ce que**
le silicate alcalin ou alcalinoterreux sélectionné est le silicate de lithium, de magnésium, de potassium ou de sodium ou un mélange de ceux-ci.

3. Procédé selon l'une des revendications précédentes,
**caractérisé par**
l'étape de vérification de la tenue du pigment de couleur sur la surface du granulé au moyen d'un test de cuisson pour déterminer une quantité de modifications de couleur du granulé coloré à une température qui peut être prédéterminée sur la base des solutions de pigments de couleur.

4. Procédé selon l'une des revendications précédentes,
**caractérisé par**
l'étape de détermination du pH du mélange total après l'étape de combustion du mélange total.

5. Utilisation d'un liant consistant en au moins un silicate alcalin ou alcalinoterreux ou en mélanges de ceux-ci, en au moins un additif, l'additif étant un composé d'aluminium, de phosphore, de calcium, de zinc, de titane, de soufre ou d'azote ou un mélange de ceux-ci, une solution de soude caustique-acide borique produite par mélange d'acide borique avec de la soude caustique et H₂O et des pigments de couleurs mélangés avec le liant pour un revêtement de surface de granulés dans une plage de températures allant de 450 °C à 550 °C au moyen d'une source de chauffage disposée à l'extérieur de la chambre de combustion, les granulés étant des éclats de verre granulés, de la farine de verre, de l'argile expansée, du verre expansé, de la perlite, des éclats de céramique, des éclats d'Al₂O₃, du sable de bore, des éclats d'ardoise, du sable de quartz ou du calcaire.

6. Granulés colorés,
les granulés colorés étant produits par un procédé selon l'une des revendications 1 à 4,
**caractérisés en ce que** les granulés sont revêtus d'un liant de verre soluble stabilisé à l'acide borique.

7. Granulés colorés selon la revendication 6,
**caractérisés en ce que**
les granulés colorés présentent un pH d'environ 6 à 8.
